(19) Europäisches Patentamt
European Patent Office
Office européen des brevets

(11) **EP 3 396 334 B1**

(12) **EUROPÄISCHE PATENTSCHRIFT**

(45) Veröffentlichungstag und Bekanntmachung des Hinweises auf die Patenterteilung:
**26.05.2021 Patentblatt 2021/21**

(21) Anmeldenummer: **18162742.3**

(22) Anmeldetag: **20.03.2018**

(51) Int Cl.:
**G01F 23/284** (2006.01)     **G01F 23/00** (2006.01)
**G01S 13/88** (2006.01)     **G01S 7/41** (2006.01)
**G01S 13/10** (2006.01)

(54) **VERFAHREN ZUR BESTIMMUNG DES FÜLLSTANDES UND FÜLLSTANDMESSGERÄT**

METHOD FOR DETERMINING THE FILL LEVEL AND A LEVEL INDICATOR

PROCÉDÉ DE DÉTERMINATION DE NIVEAU DE REMPLISSAGE ET APPAREIL DE MESURE DE NIVEAU DE REMPLISSAGE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **24.04.2017 DE 102017108702**

(43) Veröffentlichungstag der Anmeldung:
**31.10.2018 Patentblatt 2018/44**

(73) Patentinhaber: **Krohne S.A.S.
26103 Romans-sur-Isere Cedex (FR)**

(72) Erfinder:
• **Khodjet-Kesba, Mahmoud
26300, Bourg de Peage (FR)**
• **Pichot, Vincent
26100 Romans-sur-Isère (FR)**

(74) Vertreter: **Gesthuysen Patentanwälte
Patentanwälte
Huyssenallee 100
45128 Essen (DE)**

(56) Entgegenhaltungen:
**EP-A1- 2 365 302     EP-A1- 2 759 813
EP-A2- 1 191 315     WO-A1-00/43806**

**Beschreibung**

Die Erfindung geht aus von einem Verfahren zur Bestimmung des Füllstandes eines in einem Behälter angeordneten Prozessmediums mit einem Füllstandmessgerät, wobei das Füllstandmessgerät als TDR-Füllstandmessgerät ausgestaltet ist, wobei das Füllstandmessgerät wenigstens eine Signalleitung zur Führung eines elektromagnetischen Signals, einen Signalleitungskopf und eine Elektronikeinheit aufweist, wobei die Signalleitung in das Prozessmedium hineinragt und wobei das Verfahren wenigstens die folgenden Schritte umfasst:

- Erzeugen eines pulsförmigen Sendesignals mit einer Amplitude $As$ durch die Elektronikeinheit, wobei sich das Sendesignal als Messignal veränderlicher Amplitude entlang der Signalleitung ausbreitet,

- Erfassen und Auswerten wenigstens eines Reflexionssignals mit einer Amplitude $A_{refl}$ durch die Elektronikeinheit, wobei das Reflexionssignal einer Reflexion des Messignals an einer Grenzfläche zwischen einem ersten und einem zweiten Medium entspricht, wobei das erste Medium eine erste Impedanz $z_0$ und das zweite Medium eine zweite Impedanz $z_1$ aufweist.

Zudem geht die Erfindung aus von einem Füllstandmessgerät zur Bestimmung des Füllstandes eines Prozessmediums in einem Behälter, umfassend wenigstens eine Signalleitung zur Führung eines elektromagnetischen Signals, einen Signalleitungskopf und eine Elektronikeinheit, wobei die Elektronikeinheit zum Erzeugen eines pulsförmigen Sendesignals ausgestaltet ist, wobei sich das Sendesignal als Messignal entlang der Signalleitung ausbreitet, und wobei die Elektronikeinheit zum Erfassen und Auswerten wenigstens eines Reflexionssignals mit einer Amplitude $A_{refl}$ ausgestaltet ist, wobei das Reflexionssignal einer Reflexion des Messignals an einer Grenzfläche zwischen einem ersten und einem zweiten Medium entspricht, wobei das erste Medium eine erste Impedanz $z_0$ und das zweite Medium eine zweite Impedanz $z_1$ aufweist.

Die Bestimmung des Füllstandes eines in einem Behälter angeordneten Mediums basierend auf dem Time-Domain-Reflectometrie (TDR)-Verfahren ist aus dem Stand der Technik bekannt. TDR-Füllstandmessgeräte weisen eine Signalleitung auf, die im Betrieb in das zu messende Prozessmedium hineinragt. Das elektromagnetische Messsignal wird entlang der Signalleitung zu dem Prozessmedium geleitet. Auf Grund der unterschiedlichen Impedanz des Mediums oberhalb des Prozessmediums und des Prozessmediums wird das Signal an der Oberfläche des Prozessmediums reflektiert. Aus der Laufzeit des reflektierten Signals kann die Füllstandshöhe des Prozessmediums bestimmt werden.

Ein in diesem Zusammenhang relevanter Parameter ist die Ausbreitungsgeschwindigkeit des elektromagne-tischen Messignals in dem Behälter und insbesondere in dem Medium oberhalb des Prozessmediums. Diese ist abhängig von der relativen Permittivität des Mediums. Ist das oberhalb des Prozessmediums angeordnete Medium von Luft verschieden oder ändert sich die Zusammensetzung des Mediums im Laufe einer Messung, so verbessert die Kenntnis der relativen Permittivität der von dem Messignal durchlaufenen Medium die Genauigkeit der Füllstandsbestimmung.

Darüber hinaus ist die Kenntnis der Ausbreitungsgeschwindigkeit des Messignals ebenfalls relevant, wenn die Grenzfläche eines mehrkomponentigen Prozessmediums bestimmt wird, da das elektromagnetische Messignal in diesem Fall wenigstens zwei unterschiedliche Medien, nämlich die Gasphase oberhalb des Prozessmediums und eine Komponente des Prozessmediums durchläuft.

Die Druckschrift DE 10 2012 105 281 A1 offenbart ein Füllstandmessgerät, wobei zur Bestimmung der Die-lektrizitätszahl einer oberhalb des Prozessmediums angeordneten Gasphase ein zusätzlicher Wellenleiter vorhanden ist, der mit der zu vermessenden Gasphase eine Grenzfläche ausbildet, an welcher ein wesentlicher Teil des der Gasphase über den Wellenleiter zugeführten Messignals reflektiert wird. Da die Reflektivität von der Dielektrizitätszahl des an die Grenzfläche angrenzenden Mediums abhängt, ist die Amplitude des reflektierten Signals ein Maß für die Dielektrizitätszahl.

Das Vorhandensein einer weiteren Messanordnung zur Bestimmung der Dielektrizitätszahl weist den Nachteil auf, dass zum einen der Einbau der Messanordnung in den Behälter nicht nur zusätzliche Materialkosten und zusätzliches Gewicht mit sich bringt, sondern ebenfalls eine Quelle für thermische Verluste darstellt, die insbesondere bei Anwendungen, die hohe Temperaturen erfordern, nachteilig ist. Zum anderen kann es je nach Einbauort der zusätzlichen Messanordnung vorkommen, dass das Prozessmedium den Wellenleiter erreicht und überdeckt, wodurch eine Messung der Dielektrizitätszahl des Mediums oberhalb des Prozessmediums nicht mehr möglich ist.

Zudem ist aus der Druckschrift DE 10 2009 002 785 A1 ein Verfahren zur Messung des Füllstandes eines in einem Behälter angeordneten Füllgutes bekannt, wobei Veränderungen der Zusammensetzung des oberhalb des Füllgutes befindlichen Gases erkannt werden. Hierzu wird vorab eine Referenzfunktion abgeleitet, die einen Amplitudenverlauf des an der Füllgutoberfläche reflektierten Reflexionssignals wiedergibt, das das Messgerät empfängt, wenn sich über dem Füllgut ein bekanntes Referenzgas befindet. Im Messbetrieb werden dann aus den empfangenen Reflexionssignalen Hilfsfunktionen abgeleitet und mit der Referenzfunktion verglichen, wobei eine Abweichung der Hilfsfunktion von der Referenzfunktion darauf hinweist, dass die Zusammensetzung des oberhalb des Füllgutes befindlichen Gases von dem Referenzgas abweicht. Eine Bestimmung der relativen Permittivität des Mediums oberhalb des Prozessmediums ist mit diesem Verfahren nicht möglich

EP 1191315 A2, EP 2365302 A1, WO 00/43806 A1 und EP 2759813 A1 offenbaren Füllstandmessgeräte sowie Verfahren zur Messung des Füllstandes eines in einem Behälter angeordneten Prozessmediums.

Ausgehend von diesem Stand der Technik liegt der Erfindung die Aufgabe zu Grunde ein Verfahren zur Bestimmung des Füllstandes eines in einem Behälter angeordneten Prozessmediums anzugeben, das eine besonders hohe Messgenauigkeit aufweist und das gleichzeitig besonders einfach zu realisieren ist. Zudem liegt der Erfindung die Aufgabe zu Grunde, ein entsprechendes Füllstandmessgerät anzugeben.

Gemäß einer ersten Lehre wird die zuvor dargelegte Aufgabe durch ein eingangs genanntes Verfahren dadurch gelöst, dass die relative Permittivität $\varepsilon_r$ des zweiten Mediums zumindest in Abhängigkeit von der Amplitude des durch das erste Medium transmittierten Messsignals und der Amplitude $A_{refl}$ des Reflexionssignals bestimmt wird.

Es wurde erkannt, dass bei der Messung des Füllstandes eines in einem Behälter angeordneten Mediums mittels eines TDR-Verfahrens die an den Grenzflächen zwischen einem ersten und einem zweiten Medium auftretenden Reflexionen zur Bestimmung der relativen Permittivität des zweiten Mediums genutzt werden können. Dabei wird unter einem zweiten Medium im Rahmen der vorliegenden Erfindung das Medium verstanden, an dem das Messsignal zurück in das erste Medium reflektiert wird.

Das erfindungsgemäße Verfahren weist den Vorteil auf, dass neben der Signalleiteranordnung zur Bestimmung des Füllstandes keine weitere Messanordnung an dem Behälter angeordnet ist, wodurch das Füllstandmessgerät besonders einfach aufgebaut und das Verfahren besonders leicht durchzuführen ist. Erfindungsgemäß wird neben der Laufzeitanalyse des an der Oberfläche des Prozessmediums reflektierten Messsignals ebenfalls die Amplitude wenigstens einer Reflexion an einer Grenzfläche zwischen einem ersten und einem zweiten Medium ausgewertet. Dabei wird zur Bestimmung der relativen Permittivität das Verhältnis aus der Amplitude des Reflexionssignals und der Amplitude des auf die Grenzfläche einfallenden Signals ausgewertet. In vorteilhafter Weise werden damit sowohl die aktuelle Messsituation als auch sich auf die Laufzeit und auf die Amplitude des Mess- und Reflexionssignals auswirkende Prozesse, wie beispielsweise Änderungen der Zusammensetzung der oberen Gasphase, zur Bestimmung des Füllstandes berücksichtigt. In der Folge weist das erfindungsgemäße Verfahren eine besonders hohe Messgenauigkeit auf.

Gemäß einer vorteilhaften Ausgestaltung ergibt sich das durch das erste Medium transmittierte Messsignal aus dem Sendesignal unter Berücksichtigung der Abschwächung auf Grund der Ausbreitung entlang der Signalleitung und/oder auf Grund von wenigstens einer weiteren Reflexion an einer weiteren Grenzfläche. Dabei ist die Abschwächung auf Grund der Ausbreitung des Messsignals entlang der Signalleitung abhängig sowohl von den Medien, die das Messsignal durchläuft als auch von der Laufstrecke, die das Messsignal in dem jeweiligen Medium zurücklegt.

Gemäß einer weiteren vorteilhaften Ausgestaltung wird zur Bestimmung der relativen Permittivität $\varepsilon_r$ des zweiten Mediums zusätzlich das Verhältnis aus der ersten Impedanz $z_0$ und der zweiten Impedanz $z_1$ berücksichtigt.

Erfindungsgemäß ist der Signalleitungskopf über einen vorzugsweise flanschförmigen Prozessanschluss mit dem Behälter verbunden und das zweite Medium ist ein gasförmiges Medium, das oberhalb des Prozessmediums angeordnet ist, wobei die Reflexion des Messsignals an der Grenzfläche des vorzugsweise flanschförmigen Prozessanschlusses und dem Inneren des Behälters erfolgt.

Erfindungsgemäß erfolgt die Bestimmung der relativen Permittivität $\varepsilon_{r\,\text{gas}}$ des gasförmigen Mediums oberhalb des Prozessmediums gemäß folgender Formel:

$$\varepsilon_{r,gas} = \left( \frac{z_{1\_gas}}{z_{0\_SK}} \cdot \frac{\alpha_0 - \dfrac{A_{fl}}{A_S}}{\alpha_0 + \dfrac{A_{fl}}{A_S}} \right)^2 ,$$

wobei $A_{fl}$ die Amplitude des Reflexionssignals einer Reflexion an der Grenzfläche des vorzugsweise flanschförmigen Prozessanschlusses und dem Inneren des Behälters ist, wobei $A_S$ die Amplitude des erzeugten Sendesignals ist wobei $\alpha_0$ die Abschwächung des Messsignals innerhalb des Signalleitungskopfes charakterisiert, wobei $z_{1\_gas}$ die Impedanz des gasförmigen Mediums oberhalb des Prozessmediums ist und wobei $z_{0\_SK}$ die Impedanz des Signalleitungskopfes ist.

Die Impedanz $z_{1\_gas}$ ist vorzugsweise die Impedanz von Luft und wird beispielsweise bestimmt, wenn der Behälter leer ist.

Gemäß einer weiteren vorteilhaften Ausgestaltung ist das zweite Medium das Prozessmedium oder im Fall eines mehrkomponentigen Prozessmediums die oberste Komponente des Prozessmediums, wobei die Reflexion des Messsignals an der Oberfläche des Prozessmediums oder der obersten Komponente des Prozessmediums erfolgt und wobei das Reflexionssignal eine Amplitude $A_{lev}$ aufweist. Gemäß dieser Ausgestaltung kann alternativ oder zusätzlich die Ausbreitungsgeschwindigkeit durch das Prozessmedium bzw. die oberste Komponente des Prozessmediums bestimmt werden.

Diese ist beispielsweise dann relevant, wenn das Prozessmedium mehrere Komponenten aufweist und die Position der Grenzfläche zwischen zwei Komponenten, nämlich der obersten und der zweitobersten Komponente, bestimmt wird. Dabei wird im Rahmen der vorliegenden Erfindung die Bestimmung der Position einer Grenzfläche zwischen zwei Komponenten eines Prozessmediums ebenfalls als eine Art der Füllstandbestimmung (eines Teils) des Prozessmediums angesehen.

Besonders bevorzugt wird sowohl die relative Permittivität und die Ausbreitungsgeschwindigkeit in der Gasphase oberhalb des Prozessmediums als auch die relative Permittivität und die Ausbreitungsgeschwindigkeit in dem Prozessmedium bzw. der obersten Komponente des Prozessmediums bestimmt. Gemäß dieser Ausgestaltung kann die Position einer Grenzfläche zwischen zwei Komponenten des Prozessmediums, insbesondere zwischen der obersten und der zweitobersten Komponente des Prozessmediums besonders genau bestimmt werden.

Besonders bevorzugt wird zur Bestimmung der relativen Permittivität $\varepsilon_{r,pm\_1}$, des Prozessmediums oder der obersten Komponente des Prozessmediums die Amplitude des Reflexionssignals $A_{lev}$ derart korrigiert, dass die Abschwächung des Messsignals auf Grund der Ausbreitung in dem oberhalb des Prozessmediums angeordneten gasförmigen Mediums berücksichtigt wird.

Gemäß einer weiteren Ausgestaltung des erfindungsgemäßen Verfahrens werden bei der Bestimmung der korrigierten Amplitude $A_{lev\_cr}$ abhängig von dem Füllstand X des Prozessmediums und damit von der Laufstrecke des Messsignals unterschiedliche Abschwächungskoeffizienten $\alpha$ berücksichtigt. Beispielsweise können in Abhängigkeit von der Laufstrecke des Messsignals entlang der Signalleitung verschiedene Abschwächungsbereiche unterschieden werden.

Gemäß einer weiteren Ausgestaltung wird die korrigierte Amplitude $A_{lev\_cr}$ in Abhängigkeit von dem Füllstand X des Prozessmediums gemäß einer der folgenden Formeln bestimmt:

$$A_{lev\_cr} = \frac{A_{lev}}{e^{\alpha_1 X}}$$

für $0 \leq X < X_1$, wobei $X_1$ der Abstand zum Prozessanschluss ist und wobei der Bereich $0 \leq X < X_1$ einen ersten Abschwächungsbereich mit einem Abschwächungskoeffizienten $\alpha_7$ definiert,

$$A_{lev\_cr} = \frac{A_{lev}}{e^{\alpha_2 (X - X_1)} e^{\alpha_1 X_1}}$$

für $X_1 \leq X < X_2$, wobei $X_1$ der Abstand zum Prozessanschluss ist und wobei der Bereich $X_1 \leq X < X_2$ einen zweiten Abschwächungsbereich mit einem Abschwächungskoeffizienten $\alpha_2$ definiert,

$$A_{lev\_cr} = \frac{A_{lev}}{e^{\alpha_3 (X - X_2)} e^{\alpha_2 (X_2 - X_1)} e^{\alpha_1 X_1}}$$

für $X_2 \leq X < X_3$, wobei $X_3$ der Abstand zum Prozessanschluss ist und wobei der Bereich $X_2 \leq X < X_3$ einen dritten Abschwächungsbereich mit einem Abschwächungskoeffizienten $\alpha_3$ definiert.

Gemäß einer Ausgestaltung ist $X_1 = 500$ mm, $X_2 = 1\,800$ mm und $X_3 = 60\,000$ mm.

Denkbar ist es ebenfalls mehr oder weniger als drei Abschwächungsbereiche voneinander zu unterscheiden. Darüber hinaus sind die zuvor genannten Werte zur Einteilung der Abschwächungsbereiche lediglich beispielhaft. Eine Einteilung basierend auf anderen Laufstrecken, insbesondere in Abhängigkeit von dem Medium oberhalb des Prozessmediums, ist ebenfalls denkbar.

Die Bestimmung der relativen Permittivität $\varepsilon_{r,pm\_1}$, des Prozessmediums oder der obersten Komponente des Prozessmediums erfolgt vorzugsweise gemäß folgender Formel:

$$\varepsilon_{r,pm\_1} = \left( \frac{1 - \dfrac{A_{lev\_cr}}{\alpha_0 A_S \left( 1 - \left( \dfrac{A_{fl}}{\alpha_0 A_S} \right)^2 \right)}}{1 + \dfrac{A_{lev\_cr}}{\alpha_0 A_S \left( 1 - \left( \dfrac{A_{fl}}{\alpha_0 A_S} \right)^2 \right)}} \right)^2 \cdot \varepsilon_{r,gas} ,$$

wobei $A_{fl}$ die Amplitude des Reflexionssignals einer Reflexion an der Grenzfläche des vorzugsweise flanschförmigen

EP 3 396 334 B1

Prozessanschlusses und dem Inneren des Behälters ist, wobei $A_s$ die Amplitude des erzeugten Sendesignals ist, wobei $\alpha_0$ die Abschwächung des Messsignals innerhalb des Signalleitungskopfes charakterisiert, und wobei $Al_{ev\_cr}$ die um die Abschwächung korrigierte Amplitude der Reflexion am Prozessmedium ist.

Gemäß einer weiteren Ausgestaltung des Verfahrens weist das Prozessmedium wenigstens drei Komponenten auf, wobei zur Bestimmung der Position einer Grenzfläche zwischen einer Komponente n und einer Komponente (n+1), wobei die Komponente n dem ersten Medium und die Komponente (n+1) dem zweiten Medium entspricht, zumindest die relative Permittivität $\varepsilon_{r,pm\_n}$ der Komponente n bestimmt wird und wobei die Bestimmung gemäß folgender Formel erfolgt:

$$\varepsilon_{r,pm\_n} = \left( \frac{1 - \dfrac{A_{lev\_cr\_n}}{A_{x\_n}}}{1 + \dfrac{A_{lev\_cr\_n}}{A_{x\_n}}} \right)^2 \cdot \varepsilon_{r,pm\_(n-1)} \, ,$$

wobei $A_{lev\_cr\_n}$ die korrigierte Amplitude des Reflexionssignals einer Amplitude $A_{lev\_n}$ ist, wobei $A_{lev\_n}$ die Amplitude des Reflexionssignals einer Reflexion des Messsignals an der Grenzfläche zwischen der Komponente (n-1) und der Komponente n ist,

wobei die korrigierte Amplitude die Abschwächung des Messsignals auf Grund der Ausbreitung in dem gasförmigen Medium oberhalb des Prozessmediums und/oder in der Komponente oder den Komponenten des Prozessmediums, die oberhalb der Komponente n angeordnet ist bzw. sind, berücksichtigt

und wobei $A_{x\_n}$ die Amplitude des durch das erste Medium bzw. die Komponente n transmittierten Messsignals ist und wobei $A_{x\_n}$ gemäß folgender Formel bestimmt wird:

$$A_{x\_n} = \alpha_0 A_S \left( 1 - \left( \frac{A_{fl}}{\alpha_0 A_S} \right)^2 \right) \left( 1 - \left( \frac{\sqrt{\varepsilon_{r,gas}} - \sqrt{\varepsilon_{r,pm\_1}}}{\sqrt{\varepsilon_{r,gas}} + \sqrt{\varepsilon_{r,pm\_1}}} \right)^2 \right) \prod_{k=2}^{n-1} \left( 1 - \left( \frac{\sqrt{\varepsilon_{r,pm\_k-1}} - \sqrt{\varepsilon_{r,pm\_k}}}{\sqrt{\varepsilon_{r,pm\_k-1}} + \sqrt{\varepsilon_{r,pm\_k}}} \right)^2 \right)$$

$$= A_{x\_2} \prod_{k=2}^{n-1} \left( 1 - \left( \frac{\sqrt{\varepsilon_{r,pm\_k-1}} - \sqrt{\varepsilon_{r,pm\_k}}}{\sqrt{\varepsilon_{r,pm\_k-1}} + \sqrt{\varepsilon_{r,pm\_k}}} \right)^2 \right)$$

wobei $A_{x\_2}$ die Amplitude des Messignals an der Grenzfläche zwischen der obersten und der zweitobersten Komponente des Prozessmediums ist.

Gemäß einer weiteren vorteilhaften Ausgestaltung werden basierend auf der bestimmten relativen Permittivität $\varepsilon_r$ die Ausbreitungsgeschwindigkeit des Messsignals und des Reflexionssignals in dem zweiten Medium und die Laufzeit des Mess- und Reflexionssignals bestimmt und davon ausgehend wird bzw. werden zumindest der Füllstand des Prozessmediums und/oder die Position einer Grenzfläche zwischen einer ersten und einer zweiten Komponente eines mehrkomponentigen Prozessmediums bestimmt.

Die Bestimmung der Füllstandshöhe weist auf Grund der Berücksichtigung der aktuellen Ausbreitungsgeschwindigkeit des Sende- und Reflexionssignals eine besonders hohe Messgenauigkeit auf.

Besonders vorteilhaft werden ebenfalls Änderungen der relativen Permittivität erkannt und über die Änderung der Ausbreitungsgeschwindigkeit bei der Bestimmung des Füllstandes berücksichtigt.

Weist das Prozessmedium mehr als eine Komponente auf, wobei die verschiedenen Komponenten durch wenigstens eine Grenzfläche voneinander getrennt sind, so wird alternativ oder zusätzlich die Position der wenigstens einen Grenzfläche bestimmt. Denkbar ist ebenfalls, dass das Prozessmedium mehr als zwei Komponenten und damit auch mehr als eine Grenzfläche aufweist. Mit dem zuvor beschriebenen Verfahren ist es ebenfalls möglich, unter Berücksichtigung der Ausbreitungsgeschwindigkeiten in den einzelnen Komponenten des Prozessmediums die Positionen der verschiedenen Grenzflächen zu bestimmen.

Grundsätzlich ist es denkbar, erst über die gemessene Permittivität die Ausbreitungsgeschwindigkeit im Medium zu bestimmen und davon ausgehend den Füllstand des Prozessmediums zu bestimmen. Daneben ist es ebenfalls denkbar, den Füllstand des Prozessmediums zunächst beispielsweise unter der Annahme zu bestimmen, dass sich oberhalb des Prozessmediums Luft im Behälter befindet. Basierend auf der erfindungsgemäß bestimmten Permittivität wird dann ein Korrekturfaktor zur Korrektur des Füllstandes ermittelt, sofern die Ausbreitungsgeschwindigkeit unter Beachtung eines Toleranzbereiches von der Ausbreitungsgeschwindigkeit in Luft abweicht. Dabei kann die Bestimmung der relativen Permittivität in Echtzeit erfolgen oder auch in regelmäßigen oder unregelmäßen Zeitabständen.

Gemäß einer zweiten Lehre der vorliegenden Erfindung wird die eingangs dargelegte Aufgabe durch ein eingangs genanntes Füllstandmessgerät dadurch gelöst, dass die Elektronikeinheit zur Bestimmung der relativen Permittivität $\varepsilon_r$ des zweiten Mediums zumindest in Abhängigkeit von der Amplitude des durch das erste Medium transmittierten Messsignals und der Amplitude $A_{refl}$ des Reflexionssignals ausgestaltet ist.

Gemäß einer besonders bevorzugten Ausgestaltung führt das Füllstandmessgerät im Betrieb eines der zuvor beschriebenen Verfahren durch.

Im Einzelnen gibt es nun eine Vielzahl von Möglichkeiten das erfindungsgemäße Verfahren und das erfindungsgemäße Füllstandmessgerät auszugestalten und weiterzubilden. Dazu wird verwiesen sowohl auf die den unabhängigen Patentansprüchen nachgeordneten Patentansprüche als auch auf die nachfolgende Beschreibung von bevorzugten Ausführungsbeispielen in Verbindung mit der Zeichnung. In der Zeichnung zeigen

Fig. 1     ein erstes Ausführungsbeispiel eines erfindungsgemäßen Verfahrens,

Fig. 2     ein zweites Ausführungsbeispiel eines erfindungsgemäßen Verfahrens und

Fig. 3     ein erstes Ausführungsbeispiel eines erfindungsgemäßen Füllstandmessgeräts.

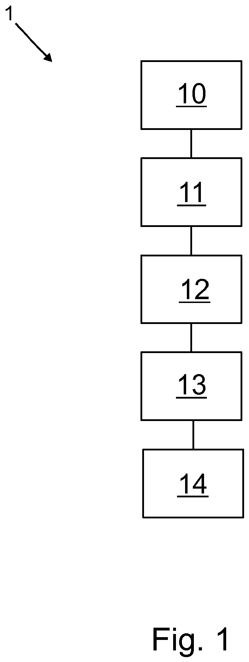

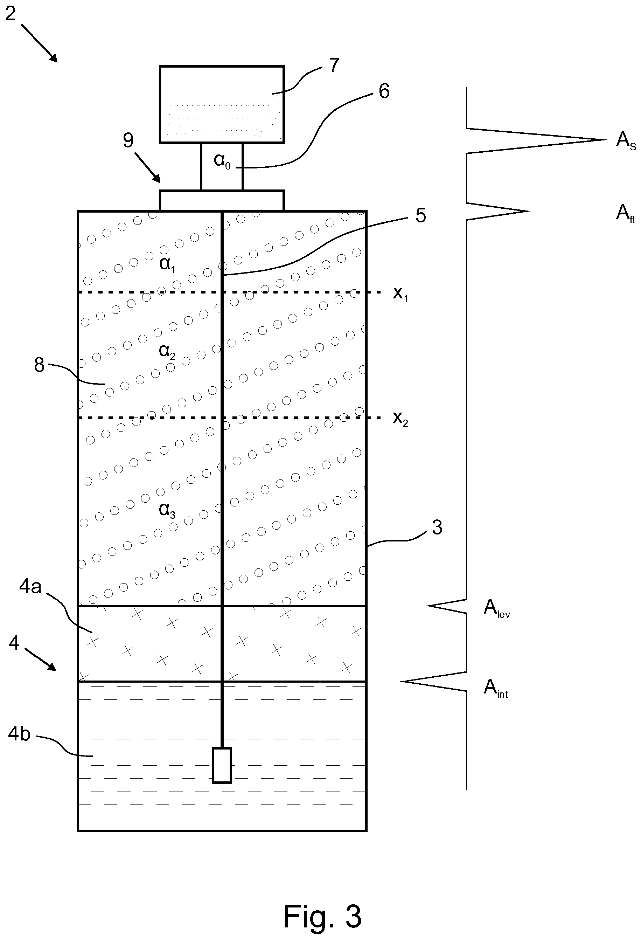

Fig. 1 zeigt ein erstes Ausführungsbeispiel eines erfindungsgemäßen Verfahrens 1 zur Bestimmung des Füllstandes eines in einem Behälter 3 angeordneten Prozessmediums 4 mittels eines in Fig. 3 dargestellten Füllstandmessgeräts 2. Das in Fig. 3 dargestellte Füllstandmessgerät 2 ist als TDR-Füllstandmessgerät ausgestaltet. Das Füllstandmessgerät 2 weist eine Signalleitung 5 zur Führung eines elektromagnetischen Signals, einen Signalleitungskopf 6 und eine Elektronikeinheit 7 zum Erzeugen eines pulsförmigen Sendesignals, das sich als Messsignal entlang der Signalleitung 5 in Richtung des Prozessmediums 4 ausbreitet. Der Signalleitungskopf 6 ist über einen flanschförmigen Prozessanschluss 9 mit dem Behälter 3 verbunden.

Das Prozessmedium 4 besteht im dargestellten Ausführungsbeispiel aus einer ersten Komponente 4a und einer zweiten Komponente 4b. Oberhalb des Prozessmediums 4 ist eine Gasphase 8 angeordnet.

Die Elektronikeinheit 7 ist weiterhin zum Erfassen und Auswerten wenigstens eines Reflexionssignals ausgestaltet, wobei das Reflexionssignal einer Reflexion des Messsignals an einer Grenzfläche zwischen einem ersten und einem zweiten Medium entspricht.

Zudem ist die Elektronikeinheit 7 zur Bestimmung der relativen Permittivität $\varepsilon_r$ des zweiten Mediums zumindest in Abhängigkeit von der Amplitude des durch das erste Medium transmittierten Messsignals und der Amplitude $A_{refl}$ des Reflexionssignals ausgestaltet.

In einem ersten Schritt 10 des in Fig. 1 dargestellten Verfahrens 1 wird durch die Elektronikeinheit 7 ein pulsförmiges Sendesignal mit einer Amplitude $A_s$ erzeugt, das sich als Messsignal veränderlicher Amplitude entlang der Signalleitung 5 in Richtung des Prozessmediums 4 ausbreitet.

In einem nächsten Schritt 11 wird ein Reflexionssignal mit einer Amplitude $A_{fl}$ durch die Elektronikeinheit 7 erfasst und ausgewertet.

Das Reflexionssignal mit der Amplitude $A_{fl}$ resultiert aus einer Reflexion des Messsignals an der Grenzfläche des flanschförmigen Prozessanschlusses 9 und dem Inneren des Behälters 3. In diesem Fall ist das erste Medium das Material des Signalleitungskopfes 6 und des flanschförmigen Prozessanschlusses 9 und das zweite Medium entspricht der Gasphase 8, die innerhalb des Behälters 3 oberhalb des Prozessmediums 4 angeordnet ist.

Die Auswertung durch die Elektronikeinheit 7 umfasst die Bestimmung 12 der relativen Permittivität $\varepsilon_{r,gas}$ der Gasphase 8 nach folgender Formel:

$$\varepsilon_{r,gas} = \left( \frac{z_{1\_gas}}{z_{0\_SK}} \cdot \frac{\alpha_0 - \dfrac{A_{fl}}{A_S}}{\alpha_0 + \dfrac{A_{fl}}{A_S}} \right)^2 ,$$

wobei $A_{fl}$ die Amplitude des Reflexionssignals einer Reflexion an der Grenzfläche des flanschförmigen Prozessanschlusses und dem Inneren des Behälters ist, wobei $A_s$ die Amplitude des erzeugten Sendesignals ist, wobei $\alpha_0$ die Abschwächung des Messsignals innerhalb des Signalleitungskopfes 6 charakterisiert, wobei $z_{1\_gas}$ die Impedanz der Gasphase 8 oberhalb des Prozessmediums 4 ist und wobei $z_{0\_SK}$ die Impedanz des Signalleitungskopfes 6 ist.

Aus der so bestimmten relativen Permittivität $\varepsilon_{r,gas}$ wird in einem nächsten Schritt 13 die Ausbreitungsgeschwindigkeit des Messsignals durch die Gasphase 8 bestimmt. Davon ausgehend wird in einem nächsten Schritt 14 aus der Laufzeit des Messsignals und des an der Oberfläche des Prozessmediums 4 reflektierten Reflexionssignals der Füllstand des Prozessmediums 4 bestimmt.

Dieses Verfahren 1 weist den Vorteil einer besonders hohen Messgenauigkeit auf, da die Laufzeit des erzeugten Messsignals abhängig von der Gasphase 8, die oberhalb des Prozessmediums 4 angeordnet ist, in Echtzeit bestimmt und bei der Berechnung des Füllstandes berücksichtigt wird.

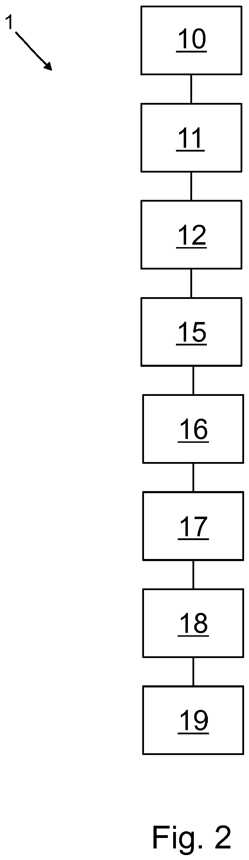

Fig. 2 zeigt ein weiteres Ausführungsbeispiel eines erfindungsgemäßen Verfahrens 1 zur Bestimmung des Füllstandes eines in einem Behälter 3 angeordneten Prozessmediums 4 mittels eines in Fig. 3 dargestellten Füllstandmessgeräts 2. Gemäß dem in Fig. 2 dargestellten Verfahren 1 wird nicht nur der obere Füllstand des in dem Behälter 3 angeordneten Prozessmediums 4 bestimmt, sondern ebenfalls die Grenzfläche zwischen den einzelnen Komponenten 4a und 4b des Prozessmediums 4.

In einem ersten Schritt 10 des Verfahrens 1 wird durch die Elektronikeinheit 7 ein pulsförmiges Sendesignal mit einer Amplitude $A_s$ erzeugt, das sich als Messsignal veränderlicher Amplitude entlang der Signalleitung 5 in Richtung des Prozessmediums 4 ausbreitet. In einem nächsten Schritt 11 wird ein erstes Reflexionssignal mit einer Amplitude $A_{fl}$ durch die Elektronikeinheit 7 erfasst und ausgewertet.

Aus der Amplitude $A_{fl}$ wird gemäß folgender Formel in einem nächsten Schritt 12 die Permittivität $\varepsilon_{r,gas}$ der Gasphase 8 bestimmt:

$$\varepsilon_{r,gas} = \left( \frac{z_{1\_gas}}{z_{0\_SK}} \cdot \frac{\alpha_0 - \dfrac{A_{fl}}{A_S}}{\alpha_0 + \dfrac{A_{fl}}{A_S}} \right)^2 ,$$

wobei wie zuvor $A_{fl}$ die Amplitude des Reflexionssignals einer Reflexion an der Grenzfläche des flanschförmigen Prozessanschlusses und dem Inneren des Behälters 3 ist, wobei $A_s$ die Amplitude des erzeugten Sendesignals ist, wobei $\alpha_0$ die Abschwächung des Sendesignals innerhalb des Signalleitungskopfes 6 charakterisiert, wobei $z_{1\_gas}$ die Impedanz der Gasphase 8 oberhalb des Prozessmediums 4 ist und wobei $z_{0\_SK}$ die Impedanz des Signalleitungskopfes 6 ist.

In einem nächsten Schritt 15 wird ein zweites Reflexionssignal mit einer Amplitude $A_{lev}$, das auf einer Reflexion des Messsignals an der Oberfläche des Prozessmediums 4 basiert, von der Elektronikeinheit 7 erfasst und ausgewertet.

Im dargestellten Ausführungsbeispiel liegt der Füllstand X in einem Abschwächungsbereich bei $X_2 \leq X < X_3$, wobei $X_2 = 1\,800$ mm und $X3 = 60\,000$ mm ist. Das Reflexionssignal wird zur Berücksichtigung der Abschwächung des Messsignals auf Grund der Ausbreitung bis zur reflektierenden Oberfläche des Prozessmediums 4 in einem nächsten Schritt 16 gemäß folgender Formel korrigiert:

$$A_{lev\_cr} = \frac{A_{lev}}{e^{\alpha_3(X-X_2)} e^{\alpha_2(X_2-X_1)} e^{\alpha_1 X_1}} ,$$

wobei $X_1 = 500$ mm und $X_2 = 1\,800$ mm ist.

In einem anschließenden Schritt 17 wird aus dem korrigierten Reflexionssignal die Permittivität $\varepsilon_{r,pm\_1}$ gemäß folgender Formel bestimmt:

$$\varepsilon_{r,pm\_1} = \left( \frac{1 - \dfrac{A_{lev\_cr}}{\alpha_0 A_S \left(1 - \left(\dfrac{A_{fl}}{\alpha_0 A_S}\right)^2\right)}}{1 + \dfrac{A_{lev\_cr}}{\alpha_0 A_S \left(1 - \left(\dfrac{A_{fl}}{\alpha_0 A_S}\right)^2\right)}} \right)^2 \cdot \varepsilon_{r,gas} ,$$

wobei $A_{fl}$ die Amplitude des Reflexionssignals einer Reflexion an der Grenzfläche des flanschförmigen Prozessanschlusses und dem Inneren des Behälters 3 ist, wobei $A_s$ die Amplitude des erzeugten Sendesignals ist, wobei $\alpha_0$ die Ab-

schwächung des Messsignals innerhalb des Signalleitungskopfes 6 charakterisiert, und wobei $A_{lev\_cr}$ die um die Abschwächung korrigierte Amplitude der Reflexion am Prozessmedium 4a ist.

Aus den bestimmten Permittivitäten $\varepsilon_{r,gas}$ und $\varepsilon_{r,pm\_1}$ lässt sich in einem nächsten Schritt 18 die jeweilige Ausbreitungsgeschwindigkeit des elektromagnetischen Messsignals durch die Gasphase 8 und durch die erste Komponente 4a des Prozessmediums 4 ermitteln.

Aus den Laufzeiten kann dann in einem nächsten Schritt 19 sowohl der Abstand der Oberfläche des Prozessmediums 4 zum Prozessanschluss 9, und damit der Füllstand des Prozessmediums 4, als auch die Position der Grenzfläche zwischen der ersten Komponente 4a und der zweiten Komponente 4b des Prozessmediums 4 bestimmt werden.

In einem alternativen Verfahren 1, wobei das Prozessmedium 4 aus mehr als zwei Komponenten besteht, wird neben der Bestimmung der relativen Permittivität und der Ausbreitungsgeschwindigkeit des Messignals in der Gasphase 8 oberhalb des Prozessmediums 4 und in der obersten Komponenten 4a des Prozessmediums 4 auch die Permittivität und die Ausbreitungsgeschwindigkeit in weiteren tiefer liegenden Komponenten bestimmt. Im Ergebnis kann so auch die Position von tiefer liegenden Grenzflächen zwischen weiteren Komponenten des Prozessmediums 4 besonders genau bestimmt werden.

Fig. 3 zeigt, wie bereits beschrieben, ein erstes Ausführungsbeispiel eines erfindungsgemäßen Füllstandmessgeräts 2. Neben dem Füllstandmessgerät 2 sind schematisch die Amplituden des Sendesignals bzw. der verschiedenen Reflexionssignale dargestellt. Das von der Elektronikeinheit 7 erzeugte Sendesignal weist die Amplitude $A_s$ auf. Das an der Grenzfläche des flanschförmigen Prozessanschlusses 9 und dem Inneren des Behälters 3 reflektierte Signal weist die Amplitude $A_{fl}$ auf. In der Darstellung ist die Impedanz des Signalleitungskopfes 6 bzw. des Prozessanschlusses 9 geringer als die Impedanz der Gasphase 8.

Das an der Oberfläche des Prozessmediums 4 reflektierte Signal weist die Amplitude $A_{lev}$ auf. Die Darstellung geht dabei von der Annahme aus, dass die Impedanz der Gasphase 8 größer ist als die Impedanz der ersten Komponente 4a des Prozessmediums 4. Daher ist die Amplitude $A_{lev}$ der Amplitude des Sendesignals $As$ entgegengesetzt.

Schließlich entspricht $A_{int}$ der Amplitude des Reflexionssignals, das an der Grenzfläche zwischen der ersten Komponente 4a und der zweiten Komponente 4b des Prozessmediums 4 reflektiert wird. Da die Impedanz der Komponente 4a größer ist als die Impedanz der Komponente 4b ist die Amplitude $A_{int}$ der Amplitude $As$ des Sendesignals ebenfalls entgegengesetzt.

Darüber hinaus ist in Fig. 3 dargestellt, dass das Messignal während der Ausbreitung entlang der Signalleitung 5 mit von der Laufstrecke abhängigen unterschiedlichen Abschwächungskoeffizienten $\alpha_0$, $\alpha_1$, $\alpha_2$, $\alpha_3$ abgeschwächt wird. Im Bereich des Signalleitungskopfes 6 wird das Messignal mit einem Abschwächungskoeffizienten $\alpha_0$ abgeschwächt. Innerhalb des Behälters 3 ist die Abschwächung des Messignals abhängig von der Füllstandshöhe und damit von der Laufstrecke des Messignals. Im dargestellten Ausführungsbeispiel werden drei Abschwächungsbereiche unterschieden: In einem ersten Bereich $0 \leq X < X_1$, wobei $X_1$ den Abstand zum Prozessanschluss 9 darstellt, wird das Messignal mit einem Abschwächungskoeffizienten $\alpha_1$ abschwächt. In einem zweiten Bereich $X_1 \leq X < X_2$ wird das Messignal mit einem Abschwächungskoeffizienten $\alpha_2$ abgeschwächt und in einem dritten Bereich $X_1 \leq X < X_3$ wird das Messignal mit einem Abschwächungskoeffizienten $\alpha_3$ abgeschwächt.

Das dargestellte Füllstandmessgerät ist dazu ausgestaltet im Betrieb ein in Fig. 1 oder Fig. 2 beschriebenes Verfahren durchzuführen.

Im Ergebnis ist ein Füllstandmessgerät 2 dargestellt, dass auf Grund der Berücksichtigung der sich auf die Laufzeit und auf die Amplitude des Sende- bzw. Reflexionssignals auswirkenden Prozesse zum einen eine besonders hohe Messgenauigkeit aufweist und zum anderen auf Grund der Tatsache, dass neben der Messanordnung zur Bestimmung des Füllstandes keine weitere Messanordnung vorhanden ist, besonders einfach ausgestaltet ist.

**Bezugszeichen**

1 Verfahren zur Bestimmung des Füllstandes
2 Füllstandmessgerät
3 Behälter
4 Prozessmedium
4a erste Komponente des Prozessmediums
4b zweite Komponente des Prozessmediums
5 Signalleitung
6 Signalleitungskopf
7 Elektronikeinheit
8 Gasphase
9 Prozessanschluss

10    Erzeugen eines pulsförmigen Sendesignals
11    Erfassen und Auswerten eines Reflexionssignals
12    Bestimmung der relativen Permittivität der Gasphase
13    Bestimmung der Ausbreitungsgeschwindigkeit des Messsignals durch die Gasphase
14    Bestimmung des Füllstandes des Prozessmediums
15    Erfassen und Auswerten eines zweiten Reflexionssignals
16    Korrektur des Reflexionssignals
17    Bestimmung der relativen Permittivität des Prozessmediums
18    Bestimmung der Ausbreitungsgeschwindigkeit durch die Gasphase und durch das Prozessmedium
19    Bestimmung des Füllstandes und der Grenzfläche zwischen der ersten und der zweiten Komponente des Prozessmediums

**Patentansprüche**

1.    Verfahren (1) zur Bestimmung des Füllstandes eines in einem Behälter (3) angeordneten Prozessmediums (4, 4a, 4b) mit einem Füllstandmessgerät (2), wobei das Füllstandmessgerät (2) als TDR-Füllstandmessgerät ausgestaltet ist, wobei das Füllstandmessgerät (2) wenigstens eine Signalleitung (5) zur Führung eines elektromagnetischen Signals, einen Signalleitungskopf (6) und eine Elektronikeinheit (7) aufweist, wobei die Signalleitung (5) in das Prozessmedium (4, 4a, 4b) hineinragt und wobei das Verfahren (1) wenigstens die folgenden Schritte umfasst:

- Erzeugen (10) eines pulsförmigen Sendesignals mit einer Amplitude $A_s$ durch die Elektronikeinheit (7), wobei sich das Sendesignal als Messsignal veränderlicher Amplitude entlang der Signalleitung (5) ausbreitet,
- Erfassen und Auswerten (11) wenigstens eines Reflexionssignals mit einer Amplitude $A_{refl}$ durch die Elektronikeinheit (7), wobei das Reflexionssignal einer Reflexion des Messsignals an einer Grenzfläche zwischen einem ersten und einem zweiten Medium entspricht, wobei das erste Medium eine erste Impedanz $z_0$ und das zweite Medium eine zweite Impedanz $z_1$ aufweist,

wobei die relative Permittivität $\varepsilon_r$ des zweiten Mediums zumindest in Abhängigkeit von der Amplitude des durch das erste Medium transmittierten Messsignals und der Amplitude $A_{refl}$ des Reflexionssignals bestimmt wird **dadurch gekennzeichnet,**
**dass** der Signalleitungskopf (6) über einen vorzugsweise flanschförmigen Prozessanschluss (9) mit dem Behälter (3) verbunden ist, dass das zweite Medium ein gasförmiges Medium (8) ist, das oberhalb des Prozessmediums (4, 4a, 4b) angeordnet ist und dass die Reflexion des Messsignals an der Grenzfläche des vorzugsweise flanschförmigen Prozessanschlusses (9) und dem Inneren des Behälters (3) erfolgt und
**dass** die Bestimmung (12) der relativen Permittivität $\varepsilon_{r,gas}$ des gasförmigen Mediums (8) gemäß folgender Formel erfolgt:

$$\varepsilon_{r,gas} = \left( \frac{z_{1\_gas}}{z_{0\_SK}} \cdot \frac{\alpha_0 - \dfrac{A_{fl}}{A_S}}{\alpha_0 + \dfrac{A_{fl}}{A_S}} \right)^2 ,$$

wobei $A_{fl}$ die Amplitude des Reflexionssignals einer Reflexion an der Grenzfläche des vorzugsweise flanschförmigen Prozessanschlusses (9) und dem Inneren des Behälters (3) ist, wobei $A_s$ die Amplitude des erzeugten Sendesignals ist, wobei $\alpha_0$ die Abschwächung des Messsignals innerhalb des Signalleitungskopfes (6) charakterisiert, wobei $z_{1\_gas}$ die Impedanz des gasförmigen Mediums (8) oberhalb des Prozessmediums (4, 4a, 4b) ist und wobei $z_{0\_SK}$ die Impedanz des Signalleitungskopfes (6) ist.

2.    Verfahren (1) nach Anspruch 1, **dadurch gekennzeichnet, dass** das durch das erste Medium transmittierte Messsignal sich aus dem Sendesignal unter Berücksichtigung der Abschwächung auf Grund der Ausbreitung entlang der Signalleitung (5) und/oder auf Grund von wenigstens einer weiteren Reflexion an einer weiteren Grenzfläche ergibt.

3.    Verfahren (1) nach Anspruch 1 oder 2, **dadurch gekennzeichnet, dass** zur Bestimmung der relativen Permittivität $\varepsilon_r$ des zweiten Mediums zusätzlich das Verhältnis aus der ersten Impedanz $z_0$ und der zweiten Impedanz $z_1$ be-

rücksichtigt wird.

4. Verfahren (1) nach einem der Ansprüche 1 bis 3, **dadurch gekennzeichnet, dass** das zweite Medium das Prozessmedium (4, 4a, 4b) oder im Fall eines mehrkomponentigen Prozessmediums (4, 4a, 4b) die oberste Komponente des Prozessmediums (4, 4a, 4b) ist, dass die Reflexion des Messsignals an der Oberfläche des Prozessmediums (4, 4a, 4b) oder der obersten Komponente des Prozessmediums (4, 4a, 4b) erfolgt und dass das Reflexionssignal eine Amplitude $A_{lev}$ aufweist.

5. Verfahren (1) nach Anspruch 4, **dadurch gekennzeichnet, dass** zur Bestimmung der relativen Permittivität $\varepsilon_{r,pm\_1}$, des Prozessmediums oder der obersten Komponente des Prozessmediums (4, 4a, 4b) die Amplitude des Reflexionssignals $A_{lev}$ derart korrigiert wird, dass die Abschwächung des Messsignals auf Grund der Ausbreitung in dem oberhalb des Prozessmediums (4, 4a, 4b) angeordneten gasförmigen Mediums (8) berücksichtigt wird.

6. Verfahren (1) nach Anspruch 5, **dadurch gekennzeichnet, dass** bei der Bestimmung der korrigierten Amplitude $A_{lev\_cr}$ abhängig von dem Füllstand $X$ des Prozessmediums und damit von der Laufstrecke des Messsignals unterschiedliche Abschwächungskoeffizienten $\alpha$ berücksichtigt werden.

7. Verfahren (1) nach einem der Ansprüche 5 oder 6, **dadurch gekennzeichnet, dass** die korrigierte Amplitude $A_{lev\_cr}$ in Abhängigkeit von dem Füllstand X des Prozessmediums gemäß einer der folgenden Formeln bestimmt wird (16):

$$A_{lev\_cr} = \frac{A_{lev}}{e^{\alpha_1 X}}$$ für $0 \leq X < X_1$, wobei $X_1$ der Abstand zum Prozessanschluss (9) ist und wobei der Bereich $0 \leq X < X_1$ einen ersten Abschwächungsbereich mit einem Abschwächungskoeffizienten $\alpha_1$ definiert,

$$A_{lev\_cr} = \frac{A_{lev}}{e^{\alpha_2 (X-X_1)} e^{\alpha_1 X_1}}$$ für $X_1 \leq X < X_2$, wobei $X_1$ der Abstand zum Prozessanschluss (9) ist und wobei der Bereich $X_1 \leq X < X_2$ einen zweiten Abschwächungsbereich mit einem Abschwächungskoeffizienten $\alpha_2$ definiert,

$$A_{lev\_cr} = \frac{A_{lev}}{e^{\alpha_3 (X-X_2)} e^{\alpha_2 (X_2-X_1)} e^{\alpha_1 X_1}}$$ für $X_2 \leq X < X_3$, wobei $X_3$ der Abstand zum Prozessanschluss (9) ist und wobei der Bereich $X_1 \leq X < X_3$ einen dritten Abschwächungsbereich mit einem Abschwächungskoeffizienten $\alpha_3$ definiert.

8. Verfahren (1) nach einem der Ansprüche 4 bis 7, **dadurch gekennzeichnet, dass** die Bestimmung (17) der relativen Permittivität $\varepsilon_{r,pm\_1}$ des Prozessmediums (4, 4a, 4b) oder der obersten Komponente des Prozessmediums (4, 4a, 4b) gemäß folgender Formel erfolgt:

$$\varepsilon_{r,pm\_1} = \left( \frac{1 - \frac{A_{lev\_cr}}{\alpha_0 A_S \left(1 - \left(\frac{A_{fl}}{\alpha_0 A_S}\right)^2\right)}}{1 + \frac{A_{lev\_cr}}{\alpha_0 A_S \left(1 - \left(\frac{A_{fl}}{\alpha_0 A_S}\right)^2\right)}} \right)^2 \cdot \varepsilon_{r,gas}$$

wobei $A_{fl}$ die Amplitude des Reflexionssignals einer Reflexion an der Grenzfläche des vorzugsweise flanschförmigen Prozessanschlusses (9) und dem Inneren des Behälters (3) ist, wobei $As$ die Amplitude des erzeugten Sendesignals ist, wobei $\alpha_0$ die Abschwächung des Messsignals innerhalb des Signalleitungskopfes (6) charakterisiert, und wobei $A_{lev\_cr}$ die um die Abschwächung korrigierte Amplitude der Reflexion am Prozessmedium (4, 4a, 4b) ist.

9. Verfahren (1) nach einem der Ansprüche 1 bis 8, **dadurch gekennzeichnet, dass** das Prozessmedium (4, 4a, 4b) wenigstens drei Komponenten aufweist, und dass zur Bestimmung der Position einer Grenzfläche zwischen einer Komponente n und einer Komponente (n+1), wobei die Komponente n dem ersten Medium und die Komponente (n+1) dem zweiten Medium entspricht, zumindest die relative Permittivität $\varepsilon_{r,pm\_n}$ der Komponente n bestimmt wird, wobei die Bestimmung gemäß folgender Formel erfolgt:

$$\varepsilon_{r,pm\_n} = \left( \frac{1 - \dfrac{A_{lev\_cr\_n}}{A_{x\_n}}}{1 + \dfrac{A_{lev\_cr\_n}}{A_{x\_n}}} \right)^2 \cdot \varepsilon_{r,pm\_(n-1)}$$

wobei $A_{lev\_cr\_n}$ die korrigierte Amplitude des Reflexionssignals einer Amplitude $A_{lev\_n}$ ist, wobei $A_{lev\_n}$ die Amplitude des Reflexionssignals einer Reflexion des Messsignals an der Grenzfläche zwischen der Komponente (n-1) und der Komponente n ist,

wobei die korrigierte Amplitude die Abschwächung des Messsignals auf Grund der Ausbreitung in dem gasförmigen Medium oberhalb des Prozessmediums und/oder in der Komponente oder den Komponenten des Prozessmediums, die oberhalb der Komponente n angeordnet ist bzw. sind, berücksichtigt

und wobei $A_{x\_n}$ die Amplitude des durch das erste Medium bzw. die Komponente n transmittierten Messsignals ist und wobei $A_{x\_n}$ gemäß folgender Formel bestimmt wird:

$$A_{x\_n} = \alpha_0 A_S \left( 1 - \left( \frac{A_{fl}}{\alpha_0 A_S} \right)^2 \right) \left( 1 - \left( \frac{\sqrt{\varepsilon_{r,gas}} - \sqrt{\varepsilon_{r,pm\_1}}}{\sqrt{\varepsilon_{r,gas}} + \sqrt{\varepsilon_{r,pm\_1}}} \right)^2 \right) \prod_{k=2}^{n-1} \left( 1 - \left( \frac{\sqrt{\varepsilon_{r,pm\_k-1}} - \sqrt{\varepsilon_{r,pm\_k}}}{\sqrt{\varepsilon_{r,pm\_k-1}} + \sqrt{\varepsilon_{r,pm\_k}}} \right)^2 \right)$$

$$= A_{x\_2} \prod_{k=2}^{n-1} \left( 1 - \left( \frac{\sqrt{\varepsilon_{r,pm\_k-1}} - \sqrt{\varepsilon_{r,pm\_k}}}{\sqrt{\varepsilon_{r,pm\_k-1}} + \sqrt{\varepsilon_{r,pm\_k}}} \right)^2 \right)$$

wobei $A_{x\_2}$ die Amplitude des Messignals an der Grenzfläche zwischen der obersten und der zweitobersten Komponente des Prozessmediums (4, 4a, 4b) ist.

10. Verfahren (1) nach einem der Ansprüche 1 bis 9, **dadurch gekennzeichnet, dass** basierend auf der bestimmten relativen Permittivität $\varepsilon_r$ die Ausbreitungsgeschwindigkeit des Messsignals und des Reflexionssignals in dem zweiten Medium bestimmt wird, dass die Laufzeit des Mess- und Reflexionssignals bestimmt wird und dass davon ausgehend zumindest der Füllstand des Prozessmediums (4, 4a, 4b) und/oder die Position einer Grenzfläche zwischen einer ersten und einer zweiten Komponente (4a, 4b) eines mehrkomponentigen Prozessmediums (4, 4a, 4b) bestimmt werden.

11. Füllstandmessgerät (2) zur Bestimmung des Füllstandes eines Prozessmediums (4, 4a, 4b) in einem Behälter (3), umfassend wenigstens eine Signalleitung (5) zur Führung eines elektromagnetischen Signals, einen Signalleitungskopf (6) und eine Elektronikeinheit (7), wobei die Elektronikeinheit (7) zum Erzeugen eines pulsförmigen Sendesignals ausgestaltet ist, wobei sich das Sendesignal als Messsignal entlang der Signalleitung (5) ausbreitet, und wobei die Elektronikeinheit (7) zum Erfassen und Auswerten wenigstens eines Reflexionssignals mit einer Amplitude $A_{refl}$ ausgestaltet ist, wobei das Reflexionssignal einer Reflexion des Messsignals an einer Grenzfläche zwischen einem ersten und einem zweiten Medium entspricht, wobei das erste Medium eine erste Impedanz $z_0$ und das zweite Medium eine zweite Impedanz $z_1$ aufweist,

wobei die Elektronikeinheit (7) zur Bestimmung der relativen Permittivität $\varepsilon_r$ des zweiten Mediums zumindest in Abhängigkeit von der Amplitude des durch das erste Medium transmittierten Messsignals und der Amplitude $A_{refl}$ des Reflexionssignals ausgestaltet ist,

**dadurch gekennzeichnet,**

**dass** der Signalleitungskopf (6) über einen vorzugsweise flanschförmigen Prozessanschluss (9) mit dem Behälter (3) verbunden ist, dass das zweite Medium ein gasförmiges Medium (8) ist, das oberhalb des Prozessmediums (4, 4a, 4b) angeordnet ist und dass die Reflexion des Messsignals an der Grenzfläche des vorzugsweise flanschförmigen Prozessanschlusses (9) und dem Inneren des Behälters (3) erfolgt und

**dass** die Bestimmung (12) der relativen Permittivität $\varepsilon_{r,gas}$ des gasförmigen Mediums (8) gemäß folgender Formel erfolgt:

$$\varepsilon_{r,gas} = \left( \frac{z_{1\_gas}}{z_{0\_SK}} \cdot \frac{\alpha_0 - \dfrac{A_{fl}}{A_S}}{\alpha_0 + \dfrac{A_{fl}}{A_S}} \right)^{2} ,$$

wobei $A_{fl}$ die Amplitude des Reflexionssignals einer Reflexion an der Grenzfläche des vorzugsweise flanschförmigen Prozessanschlusses (9) und dem Inneren des Behälters (3) ist, wobei $As$ die Amplitude des erzeugten Sendesignals ist, wobei $\alpha_0$ die Abschwächung des Messsignals innerhalb des Signalleitungskopfes (6) charakterisiert, wobei $z_{1\_gas}$ die Impedanz des gasförmigen Mediums (8) oberhalb des Prozessmediums (4, 4a, 4b) ist und wobei $z_{0\_SK}$ die Impedanz des Signalleitungskopfes (6) ist.

**12.** Füllstandmessgerät (2) nach Anspruch 11, **dadurch gekennzeichnet, dass** das Füllstandmessgerät (2) im Betrieb ein Verfahren (1) gemäß einem der Ansprüche 1 bis 10 durchführt.

**Claims**

**1.** Method (1) for determining the fill level of a process medium (4, 4a, 4b) arranged in a container (3) using a fill level meter (2), wherein the fill level meter (2) is designed as a TDR fill level meter, wherein the fill level meter (2) has at least one signal line (5) for guiding an electromagnetic signal, a signal line head (6) and an electronics unit (7), wherein the signal line (5) extends into the process medium (4, 4a, 4b) and wherein the method (1) comprises at least the following steps:

- generating (10) a pulsed transmitter signal with an amplitude As by the electronics unit (7), wherein the transmission signal propagates along the signal line (5) as measuring signal with changing amplitude,
- detecting and evaluating (11) at least one reflection signal with an amplitude $A_{refl}$ by the electronics unit (7), wherein the reflection signal is a reflection of the measuring signal on an interface between a first and a second medium, wherein the first medium has a first impedance $z_0$ and the second medium has a second impedance $z_1$,

wherein the relative permittivity $\varepsilon_r$ of the second medium is determined at least in dependence on the amplitude of the measuring signal transmitted through the first medium and the amplitude $A_{refl}$ of the reflection signal **characterized in that** the signal line head (6) is connected to the container (3) via a flange-like process connection (9), that the second medium is a gaseous medium (8) that is arranged above the process medium (4, 4a, 4b) and that the reflection of the measuring signal takes place on the interface of the preferably flange-like process connection (9) and the interior of the container (3) and **that** the determination (12) of the relative permittivity $\varepsilon_{r,gas}$ of the gaseous medium (8) takes place using the following formula:

$$\varepsilon_{r,gas} = \left( \frac{z_{1\_gas}}{z_{0\_SK}} \cdot \frac{\alpha_0 - \dfrac{A_{fl}}{A_S}}{\alpha_0 + \dfrac{A_{fl}}{A_S}} \right)^{2} ,$$

wherein $A_{fl}$ is the amplitude of the reflection signal of a reflection on the interface of the preferably flange-like process connection (9) and the interior of the container (3), wherein As is the amplitude of the generated transmission signal, wherein $\alpha_0$ characterizes the attenuation of the measuring signal within the signal line head (6), wherein $z_{1\_gas}$ is the impedance of the gaseous phase (8) above the process medium (4, 4a, 4b) and wherein $z_{0\_SK}$ is the impedance of the signal line head (6).

**2.** Method (1) according to claim 1, **characterized in that** the measuring signal transmitted through the first medium results from the transmission signal taking into account the attenuation due to the propagation along the signal line (5) and/or due to at least one further reflection on a further interface.

3. Method (1) according to claim 1 or 2, **characterized in that**, in order to determine the relative permittivity $\varepsilon_r$ of the second medium, the ratio of the first impedance $z_0$ and the second impedance $z_1$ is additionally taken into consideration.

4. Method (1) according to any one of claims 1 to 3, **characterized in that** the second medium is the process medium or, in the case of a multi-component process medium (4, 4a, 4b), the uppermost component of the process medium (4, 4a, 4b), that the reflection of the measuring signal takes place on the surface of the process medium (4, 4a, 4b) or the uppermost component of the process medium (4, 4a, 4b) and that the reflection signal has an amplitude $A_{lev}$.

5. Method (1) according to claim 4, **characterized in that**, in order to determine the relative permittivity $\varepsilon_{r,pm1}$ of the process medium or of the uppermost component of the process medium (4, 4a, 4b), the amplitude of the reflection signal $A_{lev}$ is corrected in such a manner that the attenuation of the measuring signal due to the propagation in the gaseous medium (8) arranged above the process medium (4, 4a, 4b) is taken into account.

6. Method (1) according to claim 5, **characterized in that** different attenuation coefficients $\alpha$ are taken into account in determining the corrected amplitude $A_{lev\_cr}$ in dependence on the fill level $X$ of the process medium and, thus, on the path of the measuring signal.

7. Method (1) according to claim 5 or 6, **characterized in that** the corrected amplitude $A_{lev\_cr}$ is determined (16) in dependence on the fill level $X$ of the process medium according to one of the following formulas:

$$A_{lev\_cr} = \frac{A_{lev}}{e^{\alpha_1 X}}$$ for $0 \leq X < X_1$, wherein $X_1$ is the distance to the process connection (9) and wherein the range $0 \leq X < X_1$ defines a first attenuation range with an attenuation coefficient $\alpha_1$,

$$A_{lev\_cr} = \frac{A_{lev}}{e^{\alpha_2(X-X_1)}e^{\alpha_1 X_1}}$$ for $X_1 \leq X < X_2$, wherein $X_2$ is the distance to the process connection (9) and wherein the range $X_1 \leq X < X_2$ defines a second attenuation range with an attenuation coefficient $a_2$,

$$A_{lev\_cr} = \frac{A_{lev}}{e^{\alpha_3(X-X_2)}e^{\alpha_2(X_2-X_1)}e^{\alpha_1 X_1}}$$ for $X_1 \leq X < X_3$, wherein $X_3$ is the distance to the process connection (9) and wherein the range $X_2 \leq X < X_3$ defines a third attenuation range with an attenuation coefficient $\alpha_3$.

8. Method (1) according to any one of claims 4 to 7, **characterized in that** the determination (17) of the relative permittivity $\varepsilon_{r,pm1}$, of the process medium (4, 4a, 4b) or of the uppermost component of the process medium (4, 4a, 4b) takes place according to the following formula:

$$\varepsilon_{r,pm\_1} = \left( \frac{1 - \dfrac{A_{lev\_cr}}{\alpha_0 A_S\left(1-\left(\dfrac{A_{fl}}{\alpha_0 A_S}\right)^2\right)}}{1 + \dfrac{A_{lev\_cr}}{\alpha_0 A_S\left(1-\left(\dfrac{A_{fl}}{\alpha_0 A_S}\right)^2\right)}} \right)^2 \cdot \varepsilon_{r,gas},$$

wherein $A_{fl}$ is the amplitude of the reflection signal of a reflection on the interface of the preferably flange-like process connection (9) and the interior of the container (3), wherein $A_S$ is the amplitude of the generated transmission signal, wherein $\alpha_0$ characterizes the attenuation of the measuring signal within the signal line head (6), and wherein $A_{lev\_cr}$ is the amplitude of the reflection on the process medium (4, 4a, 4b) corrected by the attenuation.

9. Method (1) according to any one of claims 1 to 8, **characterized in that** the process medium (4, 4a, 4b) has at least three components, and that in order to determine the position of an interface between one component n and another component (n+1), wherein the component n corresponds to the first medium and the component (n+1) corresponds to the second medium, at least the relative permittivity $\varepsilon_{r,pm\_n}$ of the component n is determined, wherein the determination takes place using the following formula:

$$\varepsilon_{r,pm\_n} = \left( \frac{1 - \dfrac{A_{lev\_cr\_n}}{A_{x\_n}}}{1 + \dfrac{A_{lev\_cr\_n}}{A_{x\_n}}} \right)^{2} \cdot \varepsilon_{r,pm\_(n-1)}$$

wherein $A_{lev\_cr\_n}$ is the corrected amplitude of the reflection signal of an amplitude $A_{lev\_n}$, wherein $A_{lev\_n}$ is the amplitude of the reflection signal of a reflection of the measuring signal on the interface between the component (n-1) and the component n,

wherein the corrected amplitude takes into account the attenuation of the measuring signal due to the propagation in the gaseous medium above the process medium and/or in the component or the components of the process medium that is/are arranged above the component n,

and wherein $A_{x\_n}$ is the amplitude of the measuring signal transmitted through the first medium or, respectively, the component n and wherein $A_{x\_n}$ is determined using the following formula:

$$A_{x\_n} = \alpha_0 A_S \left( 1 - \left( \frac{A_{fl}}{\alpha_0 A_S} \right)^2 \right) \left( 1 - \left( \frac{\sqrt{\varepsilon_{r,gas}} - \sqrt{\varepsilon_{r,pm\_1}}}{\sqrt{\varepsilon_{r,gas}} + \sqrt{\varepsilon_{r,pm\_1}}} \right)^2 \right) \prod_{k=2}^{n-1} \left( 1 - \left( \frac{\sqrt{\varepsilon_{r,pm\_k-1}} - \sqrt{\varepsilon_{r,pm\_k}}}{\sqrt{\varepsilon_{r,pm\_k-1}} + \sqrt{\varepsilon_{r,pm\_k}}} \right)^2 \right)$$

$$= A_{x\_2} \prod_{k=2}^{n-1} \left( 1 - \left( \frac{\sqrt{\varepsilon_{r,pm\_k-1}} - \sqrt{\varepsilon_{r,pm\_k}}}{\sqrt{\varepsilon_{r,pm\_k-1}} + \sqrt{\varepsilon_{r,pm\_k}}} \right)^2 \right)$$

wherein $A_{x\_2}$ is the amplitude of the measuring signal on the interface between the uppermost and the second-uppermost component of the process medium (4, 4a, 4b).

10. Method (1) according to any one of claims 1 to 9, **characterized in that**, based on the determined relative permittivity $\varepsilon_r$, the propagation speed of the measuring signal and the reflection signal is determined in the second medium, that the transit time of the measuring signal and the reflection signal is determined and, based thereupon, that at least the fill level of the process medium (4, 4a, 4b) and/or the position of an interface between a first and a second component (4a, 4b) of a multi-component process medium (4, 4a, 4b) are determined.

11. Fill level meter (2) for determining the fill level of a process medium (4, 4a, 4b) in a container (3), comprising at least one signal line (5) for guiding an electromagnetic signal, a signal line head (6) and an electronics unit (7), wherein the electronics unit (7) is designed for generating a pulse-like transmission signal, wherein the transmission signal propagates as measuring signal along the signal line (5), and wherein the electronics unit (7) is designed for detecting and evaluating at least one reflection signal with an amplitude $A_{refl}$, wherein the reflection signal is a reflection of the measuring signal on an interface between a first and a second medium, wherein the first medium has a first impedance $z_0$ and the second medium has a second impedance $z_1$,

wherein the electronics unit (7) is designed for determining the relative permittivity $\varepsilon_r$ of the second medium at least in dependence on the amplitude of the measuring signal transmitted through the first medium and the amplitude $A_{refl}$ of the reflection signal,

**characterized in**

**that** that the signal line head (6) is connected to the container (3) via a preferably flange-like process connection (9), that the second medium is a gaseous medium (8) that is arranged above the process medium (4, 4a, 4b) and that the reflection of the measuring signal takes place on the interface of the preferably flange-like process connection (9) and the interior of the container (3) and

**that** the determination (12) of the relative permittivity $\varepsilon_{r,gas}$ of the gaseous medium (8) takes place using the following formula:

$$\varepsilon_{r,gas} = \left( \frac{z_{1\_gas}}{z_{0\_SK}} \cdot \frac{\alpha_0 - \dfrac{A_{fl}}{A_S}}{\alpha_0 + \dfrac{A_{fl}}{A_S}} \right)^2,$$

wherein $A_{fl}$ is the amplitude of the reflection signal of a reflection on the interface of the preferably flange-like process connection (9) and the interior of the container (3), wherein $A_s$ is the amplitude of the generated transmission signal, wherein $\alpha_0$ characterizes the attenuation of the measuring signal within the signal line head (6), wherein $z_{1\_gas}$ is the impedance of the gaseous phase (8) above the process medium (4, 4a, 4b) and wherein $z_{0\_SK}$ is the impedance of the signal line head (6).

**12.** Fill level meter (2) according to claim 11, **characterized in that** the fill level meter (1) carries out a method (1) according to any one of claims 1 to 10 during operation.

**Revendications**

1. Procédé (1) de détermination du niveau d'un milieu de traitement (4, 4a, 4b), disposé dans un récipient (3), au moyen d'un dispositif de mesure de niveau (2), le dispositif de mesure de niveau (2) étant conçu comme un dispositif de mesure de niveau TDR, le dispositif de mesure de niveau (2) comportant au moins une ligne de signal (5) destinée à conduire un signal électromagnétique, une tête de ligne de signal (6) et une unité électronique (7), la ligne de signal (5) faisant saillie dans le milieu de traitement (4, 4a, 4b) et le procédé (1) comprenant au moins les étapes suivantes :

   - générer (10), par le biais de l'unité électronique (7), un signal d'émission en forme d'impulsions ayant une amplitude $A_s$, le signal d'émission se propageant sous la forme d'un signal de mesure d'amplitude variable le long de la ligne de signal (5),
   - détecter et évaluer (11), par le biais de l'unité électronique (7), au moins un signal de réflexion d'amplitude $A_{refl}$, le signal de réflexion correspondant à une réflexion du signal de mesure au niveau d'une interface entre un premier et un deuxième milieu, le premier milieu ayant une première impédance $z_0$ et le deuxième milieu ayant une deuxième impédance $z_1$,

   la permittivité relative $\varepsilon_r$ du deuxième milieu étant déterminée au moins en fonction de l'amplitude du signal de mesure transmis à travers le premier milieu et de l'amplitude $A_{refl}$ du signal de réflexion, **caractérisé en ce que** la tête de ligne de signal (6) est reliée au récipient (3) par le biais d'un raccord de traitement (9) de préférence en forme de bride, le deuxième milieu est un milieu gazeux (8) qui est disposé au-dessus du milieu de traitement (4, 4a, 4b) et la réflexion du signal de mesure est effectuée au niveau de l'interface entre le raccord de traitement (9) de préférence en forme de bride et l'intérieur du récipient (3), et la détermination (12) de la permittivité relative $\varepsilon_{r,gas}$ du milieu gazeux (8) est effectuée selon la formule suivante :

$$\varepsilon_{r,gas} = \left( \frac{z_{1\_gas}}{z_{0\_SK}} \cdot \frac{\alpha_0 - \dfrac{A_{fl}}{A_S}}{\alpha_0 + \dfrac{A_{fl}}{A_S}} \right)^2,$$

   $A_{fl}$ étant l'amplitude du signal de réflexion d'une réflexion au niveau de l'interface du raccord de traitement (9) de préférence en forme de bride et de l'intérieur du récipient (3), $A_s$ étant l'amplitude du signal d'émission généré, ao caractérisant l'atténuation du signal de mesure à l'intérieur de la tête de ligne de signal (6), $z_{1\_gas}$ étant l'impédance du milieu gazeux (8) au-dessus du milieu de traitement (4, 4a, 4b) et $z_{0\_SK}$ étant l'impédance de la tête de ligne de signal (6).

**2.** Procédé (1) selon la revendication 1, **caractérisé en ce que** le signal de mesure transmis à travers le premier milieu résulte du signal d'émission avec prise en compte de l'atténuation due à la propagation le long de la ligne de signal (5) et/ou due à au moins une autre réflexion au niveau d'une autre interface.

**3.** Procédé (1) selon la revendication 1 ou 2, **caractérisé en ce que** le rapport de la première impédance $z_0$ et de la deuxième impédance $z_1$ est également pris en compte pour déterminer la permittivité relative $\varepsilon_r$ du deuxième milieu.

**4.** Procédé (1) selon l'une des revendications 1 à 3, **caractérisé en ce que** le deuxième milieu est le milieu de traitement (4, 4a, 4b) ou, dans le cas d'un milieu de processus (4, 4a, 4b) à plusieurs composants, le composant est le plus élevé du milieu de traitement (4, 4a, 4b), **en ce que** la réflexion du signal de mesure est effectuée sur la surface du milieu de traitement (4, 4a, 4b) ou du composant le plus élevé du milieu de traitement (4, 4a, 4b) et **en ce que** le signal de réflexion a une amplitude $A_{lev}$.

**5.** Procédé (1) selon la revendication 4, **caractérisé en ce que** l'amplitude du signal de réflexion $A_{lev}$ est corrigée de façon à prendre en compte l'atténuation du signal de mesure, due à la propagation dans le milieu gazeux (8) disposé au-dessus du milieu de traitement (4, 4a, 4b), pour déterminer la permittivité relative $\varepsilon_{r,pm\_1}$ du milieu de traitement ou du composant le plus élevé du milieu de traitement (4, 4a, 4b).

**6.** Procédé (1) selon la revendication 5, **caractérisé en ce que** différents coefficients d'atténuation $\alpha$ sont pris en compte lors de la détermination de l'amplitude corrigée $A_{lev\_cr}$ en fonction du niveau X du milieu de traitement et donc du trajet du signal de mesure.

**7.** Procédé (1) selon l'une des revendications 5 et 6, **caractérisé en ce que** l'amplitude corrigée $A_{lev\_cr}$ est déterminée en fonction du niveau X du milieu de traitement selon l'une des formules (16) suivantes :

$$A_{lev\_cr} = \frac{A_{lev}}{e^{\alpha_1 X}}$$

avec $0 \leq X < X_1$, $X_1$ étant la distance par rapport au raccord de traitement (9) et la plage $0 \leq X < X_1$ définissant une première plage d'atténuation avec un coefficient d'atténuation $\alpha_1$,

$$A_{lev\_cr} = \frac{A_{lev}}{e^{\alpha_2 (X - X_1)} e^{\alpha_1 X_1}}$$

avec $X_1 \leq X < X_2$, $X_1$ étant la distance par rapport au raccord de traitement (9) et la plage $X_1 \leq X < X_1$ définissant une deuxième plage d'atténuation avec un coefficient d'atténuation $\alpha_2$,

$$A_{lev\_cr} = \frac{A_{lev}}{e^{\alpha_3 (X - X_2)} e^{\alpha_2 (X_2 - X_1)} e^{\alpha_1 X_1}}$$

avec $X_1 \leq X < X_3$, $X_3$ étant la distance par rapport au raccord de traitement (9) et la plage $X_2 \leq X < X_3$ définissant une troisième plage d'atténuation avec un coefficient d'atténuation $\alpha_3$.

**8.** Procédé (1) selon l'une des revendications 4 à 7, **caractérisé en ce que** la détermination (17) de la permittivité relative $\varepsilon_{r,pm\_1}$ du milieu de traitement (4, 4a, 4b) ou du composant le plus élevé du milieu de traitement (4, 4a, 4b) est effectuée selon la formule suivante :

$$\varepsilon_{r,pm\_1} = \left( \frac{1 - \dfrac{A_{lev\_cr}}{\alpha_0 A_S \left( 1 - \left( \dfrac{A_{fl}}{\alpha_0 A_S} \right)^2 \right)}}{1 + \dfrac{A_{lev\_cr}}{\alpha_0 A_S \left( 1 - \left( \dfrac{A_{fl}}{\alpha_0 A_S} \right)^2 \right)}} \right)^2 \cdot \varepsilon_{r,gas}$$

$A_{fl}$ étant l'amplitude du signal de réflexion d'une réflexion au niveau de l'interface du raccord de traitement (9) de préférence en forme de bride et de l'intérieur du récipient (3), $A_S$ étant l'amplitude du signal d'émission généré, ao caractérisant l'atténuation du signal de mesure dans la tête de ligne de signal (6), et $A_{lev\_cr}$ étant l'amplitude de la réflexion sur le milieu de traitement (4, 4a, 4b) corrigée par l'atténuation.

9. Procédé (1) selon l'une des revendications 1 à 8, **caractérisé en ce que** le milieu de traitement (4, 4a, 4b) comporte au moins trois composants, et **en ce qu'**au moins la permittivité relative $\varepsilon_{r,pm\_n}$ du composant n est déterminée pour déterminer la position d'une interface entre un composant n et un composant (n + 1), le composant n correspondant au premier milieu et le composant (n + 1) correspondant au deuxième milieu, la détermination étant effectuée selon la formule suivante :

$$\varepsilon_{r,pm\_n} = \left( \frac{1 - \dfrac{A_{lev\_cr\_n}}{A_{x\_n}}}{1 + \dfrac{A_{lev\_cr\_n}}{A_{x\_n}}} \right)^2 \cdot \varepsilon_{r,pm\_(n-1)}$$

$A_{lev\_cr\_n}$ étant l'amplitude corrigée du signal de réflexion d'une amplitude $A_{lev\_n}$, $A_{lev\_n}$ étant l'amplitude du signal de réflexion d'une réflexion du signal de mesure au niveau de l'interface entre le composant (n - 1) et le composant n, l'amplitude corrigée prenant en compte l'atténuation du signal de mesure due à la propagation dans le milieu gazeux situé au-dessus du milieu de traitement et/ou dans le ou les composants du milieu de traitement qui sont disposés au-dessus du composant n,
et $A_{x\_n}$ étant l'amplitude du signal de mesure transmis à travers le premier milieu ou composant n et $A_{x\_n}$ étant déterminée selon la formule suivante :

$$A_{x\_n} = \alpha_0 A_S \left( 1 - \left( \frac{A_{fl}}{\alpha_0 A_S} \right)^2 \right) \left( 1 - \left( \frac{\sqrt{\varepsilon_{r,gas}} - \sqrt{\varepsilon_{r,pm\_1}}}{\sqrt{\varepsilon_{r,gas}} + \sqrt{\varepsilon_{r,pm\_1}}} \right)^2 \right) \prod_{k=2}^{n-1} \left( 1 - \left( \frac{\sqrt{\varepsilon_{r,pm\_k-1}} - \sqrt{\varepsilon_{r,pm\_k}}}{\sqrt{\varepsilon_{r,pm\_k-1}} + \sqrt{\varepsilon_{r,pm\_k}}} \right)^2 \right)$$

$$= A_{x\_2} \prod_{k=2}^{n-1} \left( 1 - \left( \frac{\sqrt{\varepsilon_{r,pm\_k-1}} - \sqrt{\varepsilon_{r,pm\_k}}}{\sqrt{\varepsilon_{r,pm\_k-1}} + \sqrt{\varepsilon_{r,pm\_k}}} \right)^2 \right)$$

$A_{x\_2}$ étant l'amplitude du signal de mesure au niveau de l'interface entre le composant le plus élevé et le deuxième composant le plus élevé du milieu de traitement (4, 4a, 4b).

10. Procédé (1) selon l'une des revendications 1 à 9, **caractérisé en ce que** la vitesse de propagation du signal de mesure et du signal de réflexion dans le deuxième milieu est déterminée en fonction de la permittivité relative $\varepsilon_r$ déterminée, **en ce que** le temps de propagation du signal de mesure et du signal de réflexion est déterminé et **en ce que**, à partir de là, au moins le niveau du milieu de traitement (4, 4a, 4b) et/ou la position d'une interface entre un premier et un deuxième composant (4a, 4b) d'un milieu de traitement (4, 4a, 4b) à plusieurs composants sont déterminés.

11. Dispositif de mesure de niveau (2) destiné à déterminer le niveau d'un milieu de traitement (4, 4a, 4b) dans un récipient (3), ledit dispositif comprenant au moins une ligne de signal (5) destinée à conduire un signal électromagnétique, une tête de ligne de signal (6) et une unité électronique (7), l'unité électronique (7) étant conçue pour générer un signal d'émission en forme d'impulsion, le signal d'émission se propageant sous la forme d'un signal de mesure le long de la ligne de signal (5) et l'unité électronique (7) étant conçue pour détecter et évaluer au moins un signal de réflexion d'amplitude $A_{refl}$, le signal de réflexion correspondant à une réflexion du signal de mesure au niveau d'une interface entre un premier et un deuxième milieu, le premier milieu ayant une première impédance $z_0$ et le deuxième milieu ayant une deuxième impédance $z_1$,
l'unité électronique (7) étant conçue pour déterminer la permittivité relative $\varepsilon_r$ du deuxième milieu au moins en fonction de l'amplitude du signal de mesure transmis à travers le premier milieu et de l'amplitude $A_{refl}$ du signal de réflexion,
**caractérisé en ce que**
la tête de ligne de signal (6) est reliée au récipient (3) par le biais d'un raccord de traitement (9) de préférence en forme de bride, le deuxième milieu est un milieu gazeux (8) qui est disposé au-dessus du milieu de traitement (4, 4a, 4b) et la réflexion du signal de mesure est effectuée au niveau de l'interface entre le raccord de traitement (9) de préférence en forme de bride et l'intérieur du récipient (3), et

la détermination (12) de la permittivité relative $\varepsilon_{r,gas}$ du milieu gazeux (8) est effectuée selon la formule suivante :

$$\varepsilon_{r,gas} = \left( \frac{z_{1\_gas}}{z_{0\_SK}} \cdot \frac{\alpha_0 - \dfrac{A_{fl}}{A_S}}{\alpha_0 + \dfrac{A_{fl}}{A_S}} \right)^2,$$

$A_{fl}$ étant l'amplitude du signal de réflexion d'une réflexion au niveau de l'interface du raccord de traitement (9) de préférence en forme de bride et de l'intérieur du récipient (3), $A_S$ étant l'amplitude du signal d'émission généré, ao caractérisant l'atténuation du signal de mesure à l'intérieur de la tête de ligne de signal (6), $z_{1\_gas}$ étant l'impédance du milieu gazeux (8) au-dessus du milieu de traitement (4, 4a, 4b) et $Z_{0\_SK}$ étant l'impédance de la tête de ligne de signal (6) .

**12.** Dispositif de mesure de niveau (2) selon la revendication 11, **caractérisé en ce que**, en fonctionnement, le dispositif de mesure de niveau (2) met en œuvre un procédé (1) selon l'une des revendications 1 à 10.

1

Fig. 1

1

```
┌──────────┐
│    10    │
└──────────┘
     │
┌──────────┐
│    11    │
└──────────┘
     │
┌──────────┐
│    12    │
└──────────┘
     │
┌──────────┐
│    15    │
└──────────┘
     │
┌──────────┐
│    16    │
└──────────┘
     │
┌──────────┐
│    17    │
└──────────┘
     │
┌──────────┐
│    18    │
└──────────┘
     │
┌──────────┐
│    19    │
└──────────┘
```

Fig. 2

Fig. 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102012105281 A1
- DE 102009002785 A1
- EP 1191315 A2
- EP 2365302 A1
- WO 0043806 A1
- EP 2759813 A1